# EUROPÄISCHE PATENTSCHRIFT

(11) **EP 3 763 951 B1**
(45) Veröffentlichungstag und Bekanntmachung des Hinweises auf die Patenterteilung: **18.09.2024**
(21) Anmeldenummer: 20184971.8
(22) Anmeldetag: 09.07.2020
(51) Int. Cl.: F16B 15/00, F16B 43/00, F16B 17/00, F16B 11/00, E04B 1/76, F16B 19/14, F16B 15/08

(54) **PLATTE ZUM BEFESTIGEN VON WÄRMEDÄMMPLATTEN**
PLATE FOR FASTENING INSULATING BOARDS
PLAQUE DE FIXATION DE PANNEAUX D'ISOLATION THERMIQUE

(30) Priorität: 12.07.2019 AT 506362019
(43) Veröffentlichungstag der Anmeldung: 13.01.2021
(73) Patentinhaber: Austrotherm GmbH, 7423 Pinkafeld (AT)
(72) Erfinder: Jandl, Johann, 3011 Tullnerbach (AT)
(74) Vertreter: Müllner, Martin

(56) Entgegenhaltungen:
- EP-A1- 1 645 370
- EP-A1- 3 354 812
- DE-A1- 19 701 122
- DE-U1- 202015 005 171
- FR-A1- 2 476 771
- FR-A1- 3 022 970
- JP-A- 2018 091 058
- US-A- 2 151 597
- US-A1- 2011 222 990

## Beschreibung

### Technisches Gebiet

Die vorliegende Erfindung betrifft ein Verfahren zum Befestigen von Wärmedämmplatten an einer Wand oder einer Decke, insbesondere zum nachträglichen Anbringen an einem Altbau.

### Stand der Technik

Aus WO 02/44497 A1 ist ein Dübel bekannt, der eine Spreizzone und einen plattenförmigen Dübelkopf aufweist, wobei der Dübelkopf mehrere sternförmig wegstehende Arme aufweist und wobei die Spreizzone und der Dübelkopf unmittelbar benachbart sind. Dieser Dübel dient zum Befestigen von Wärmedämmplatten. Dazu muss man für jeden Dübel ein Loch bohren, den Dübel in das Loch stecken und schließlich den Dübel in der Wand (oder in der Decke) durch Einschrauben einer Schraube oder durch Einschlagen eines Nagels verspreizen. Nachdem man eine ausreichende Anzahl von Dübeln versetzt hat (es sollen auf jede Wärmedämmplatte mehrere Dübel kommen), bringt man Klebstoff auf den Dübelköpfen und gegebenenfalls auch auf der Wand (oder der Decke) auf und drückt die Wärmedämmplatten an. Bei dieser Art der Befestigung durchdringen die Dübel die Wärmedämmplatten nicht, sodass in den Wärmedämmplatten keine Störstellen entstehen und eine homogene Wärmedämmschicht gebildet wird.

Diese Dübel werden mittlerweile in der Praxis in großem Stil verwendet. Nachteilig ist der relativ hohe Arbeitsaufwand beim Anbringen der Dübel.

Auch gemäß DE 202015005171 U1 werden Bohrlöcher hergestellt und Dübel versetzt. Gemäß Absatz [0171] kann die Bohrlochherstellung und das Dübelsetzen auch gleichzeitig mit einem entsprechenden, aber nicht näher beschriebenen Spezialwerkzeug erfolgen. Dies verringert zwar etwas den Arbeitsaufwand, aber es muss dennoch zunächst das Bohrloch gebohrt und der Dübel eingesetzt werden, wonach die Platte angeschraubt wird. Dieses Anschrauben erfolgt durch die Wärmedämmplatte hindurch, die an der entsprechenden Stelle ein Loch aufweist, welches nachher mit einem Stopfen verschlossen werden muss.

### Kurzbeschreibung der Erfindung

Es ist Aufgabe der vorliegenden Erfindung, diesen Nachteil zu beseitigen.

Diese Aufgabe wird durch ein Verfahren der eingangs genannten Art erfindungsgemäß dadurch gelöst, dass man Platten, die mehrere sternförmig wegstehende Arme und in der Mitte einen hülsenartigen Vorsprung aufweisen, jeweils durch Eintreiben eines Bolzens in der Mitte mit Hilfe eines Bolzensetzgeräts an der Decke oder der Wand in einer derartigen Anzahl versetzt, dass auf jede Wärmedämmplatte mehrere Platten kommen, wobei man auf die Platten und gegebenenfalls auf die Wand bzw. Decke Klebstoff aufbringt und danach die Wärmedämmplatten andrückt.

Das bisher notwendige Bohren von Löchern entfällt also. Die der vorliegenden Erfindung zugrunde liegende Idee besteht darin, keine Dübel mehr zu verwenden, sondern den Schaft der Dübel wegzulassen und die Dübelköpfe der bisherigen Dübel mit einem Bolzensetzgerät an die Wand bzw. die Decke zu "nageln". Die Schwierigkeit dabei ist jedoch, dass die Festigkeit der Wand bzw. der Decke insbesondere bei Altbauten an verschiedenen Stellen stark unterschiedlich sein kann. Das Bolzensetzgerät muss auf die maximale Wandfestigkeit (Deckenfestigkeit) eingestellt sein, sonst kann man die Nägel (Bolzen) an manchen Stellen nicht vollständig einschlagen. Dadurch wirken aber an Stellen mit geringer Festigkeit (wo also die Gegenkraft auf den Bolzen gering ist) extreme Kräfte auf die Platte, was dazu führt, dass der Bolzenkopf die aus Kunststoff bestehende Platte durchschlägt, sodass die Platte nicht an der Wand hält. Aus diesem Grund ist erfindungsgemäß um das Loch der Platte ein hülsenartiger Vorsprung vorgesehen. Dieser hülsenartige Vorsprung, der z.B. 8 mm hoch sein kann, kann plastisch deformiert werden, sodass zum "Abbremsen" des Bolzens ein entsprechend langer Bremsweg zur Verfügung steht, wodurch die Gefahr, dass die Platte durchschlagen wird, gebannt ist.

Vorzugsweise fixiert man zunächst Platten, von denen von dem hülsenartigen Vorsprung Stege abstehen, am Bolzensetzgerät lose, indem man die Stege in das Innere der Öffnung des Bolzensetzgeräts drückt, sodass man die Platten ohne weitere Fixierung an der Wand bzw. Decke befestigen kann.

Nach einer Ausgestaltung der Erfindung werden Platten verwendet, bei denen der Winkel zwischen den Stegen und dem hülsenartigen Vorsprung 30°-60°, vorzugsweise 40°-50°, beträgt. Auf diese Weise kann man zunächst die Platten am Bolzensetzgerät lose fixieren, indem man die Stege in das Innere der Öffnung des Bolzensetzgeräts drückt, sodass man die Platten ohne weitere Fixierung an der Wand befestigen kann. Wenn die Stege nicht genau radial von dem hülsenartigen Vorsprung abstehen, sondern einen Winkel von rund 45° gegenüber dem hülsenartigen Vorsprung einnehmen, lassen sie sich leicht nach innen biegen, sodass sie in "entspanntem" Zustand einen Umkreis aufweisen können, der deutlich größer (z.B. 1 mm bis 1,5 mm größer) ist als der Innendurchmesser der Öffnung des Bolzensetzgeräts. Somit sind hohe Fertigungstoleranzen unproblematisch.

Damit die Stege leicht in die Öffnung des Bolzensetzgeräts eingesetzt werden können ist es günstig, wenn man Platten verwendet, bei denen die Stege zumindest an ihrem freien Ende abgeschrägt sind. Auf diese Weise kann man einen Dübel mit dem Bolzensetzgerät aufnehmen, indem man das Bolzensetzgerät auf den hülsenartigen Vorsprung aufsetzt. Die Arbeiterin oder der Arbeiter braucht also nicht einmal "umzugreifen", sie bzw. er hält das Bolzensetzgerät ständig in der Hand: sie bzw. er geht mit dem Bolzensetzgerät zur Platte, nimmt diese mit dem Bolzensetzgerät auf, geht mit dem Bolzensetzgerät zur Wand bzw. Decke und versetzt die Platte durch Auslösung des Bolzensetzgeräts.

Insgesamt kann dadurch die Verlegegeschwindigkeit im Vergleich zu der Lösung der WO 02/44497 A1 mehr als verdoppelt, fast verdreifacht werden.

Es ist beabsichtigt, die Platten mit einem Bolzensetzgerät Hilti DX 460 oder Hilti DX 5 mit einem Betonvorsatz X-460-F8SS für Bolzen mit 8 mm Durchmesser zu versetzen. Ein um die Stege gelegter Umkreis sollte dann einen Durchmesser von 9,3±0,5 mm haben.

### Kurze Beschreibung der Zeichnungsfiguren

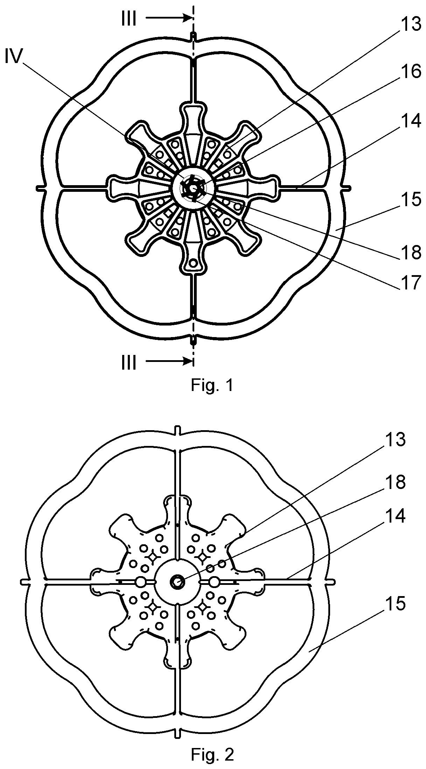

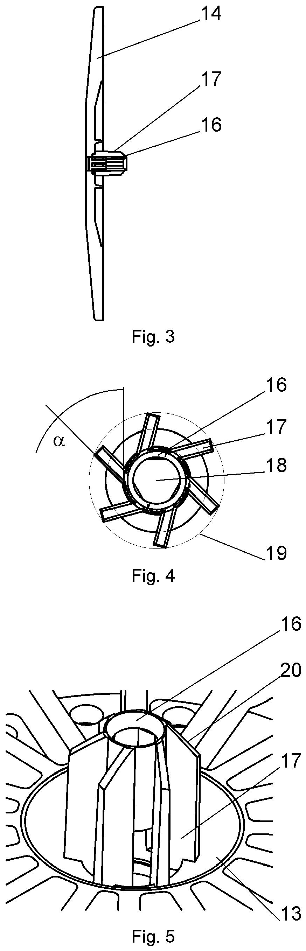

An Hand der beiliegenden Zeichnungen wird die vorliegende Erfindung näher erläutert. Es zeigt: Fig. 1 eine Platte, wie sie bei der vorliegenden Erfindung zum Einsatz kommt, von oben, d.h. von der Seite, die im versetzten Zustand von der Wand abgewandt ist; Fig. 2 zeigt dieselbe Platte von unten, d.h. von der Seite, die im versetzten Zustand der Wand zugewandt ist; Fig. 3 zeigt einen Schnitt entlang der Linie III-III in Fig. 1; Fig. 4 zeigt das Detail IV von Fig. 1; und Fig. 5 zeigt dieses Detail in perspektivischer Ansicht.

### Beschreibung der Ausführungsarten

Wie aus Fig. 1 bis 3 ersichtlich weist die Platte 13 vier radial abstehende Arme 14 auf. An ihrem äußeren Ende tragen sie einen Ring 15. Dieser Ring 15 markiert die Mindestgröße für die Fläche, die von Klebstoff bedeckt werden soll.

In der Mitte weist die Platte ein Loch 18 auf, durch welches ein Bolzen mit einem Bolzensetzgerät geschossen werden kann. Dieses Loch 18 ist aber nicht zwingend, denn das Bolzensetzgerät würde auch eventuell in der Mitte vorhandenes Material durchschlagen. Rund um das Loch 18 befindet sich ein hülsenartiger Vorsprung 16 (siehe auch Fig. 4 und 5). Wenn ein Bolzen eingeschlagen wird, dann geht der Schaft des Bolzens durch das Innere des hülsenartigen Vorsprungs 16 und das Loch 18 in die dahinterliegende Wand (oder Decke), bis der Kopf des Bolzens an dem hülsenartigen Vorsprung 16 anliegt. In diesem Augenblick wird der hülsenartige Vorsprung 16 vom Kopf des Bolzens zusammengepresst, wodurch die überschüssige Energie des Bolzens verbraucht wird, bis der Kopf des Bolzens schließlich an der Platte 13 anliegt.

Von dem hülsenartigen Vorsprung 16 stehen insgesamt sechs Stege 17 ab. Diese Stege sind gleichmäßig verteilt, weisen also zueinander jeweils einen Winkel von 60° auf. Sie stehen aber nicht radial, also nicht in einem Winkel von 90°, von dem hülsenartigen Vorsprung 16 ab, sondern in einem Winkel α (siehe Fig. 4), der im Ausführungsbeispiel 45° beträgt. In Fig. 4 ist weiters der Umkreis 19 eingezeichnet, der die Stege 17 umschließt. Die Dimensionierung ist so gewählt, dass der Umkreis 19 einen etwas größeren Durchmesser hat als der Kopf des zu verwendenden Bolzens. Da die Öffnung des Bolzensetzgeräts dem Durchmesser des Kopfes des Bolzens entspricht, bedeutet dies, dass der Umkreis auch etwas größer ist als die Öffnung des Bolzensetzgeräts. Die Stege 17 weisen an ihrem freien Ende eine Abschrägung 20 auf. Setzt man nun das Bolzensetzgerät mit seiner Öffnung auf diese Abschrägungen 20 auf, werden die Stege 17 nach innen gebogen (d.h. der Winkel α verringert sich), bis sie sich innerhalb der Öffnung befinden, sodass das Bolzensetzgerät bis zur Platte 13 aufgeschoben werden kann. Aufgrund der Elastizität der Stege 17 ist die Platte 13 in der Öffnung des Bolzensetzgeräts festgeklemmt. Das Bolzensetzgerät kann nun samt der Platte 13 an die Wand oder Decke gehalten und ausgelöst werden, wodurch die Platte 13 sicher an der Wand bzw. Decke fixiert wird.

## Patentansprüche

1. Verfahren zum Befestigen von Wärmedämmplatten an einer Wand oder einer Decke, insbesondere zum nachträglichen Anbringen an einem Altbau, wobei man Platten (13), die mehrere sternförmig wegstehende Arme (14) und in der Mitte einen hülsenartigen Vorsprung (16) aufweisen, jeweils durch Eintreiben eines Bolzens in der Mitte mit Hilfe eines Bolzensetzgeräts an der Decke oder der Wand in einer derartigen Anzahl versetzt, dass auf jede Wärmedämmplatte mehrere Platten (13) kommen, dass man auf die Platten (13) und gegebenenfalls auf die Wand bzw. Decke Klebstoff aufbringt und danach die Wärmedämmplatten andrückt.

2. Verfahren nach Anspruch 1, **dadurch gekennzeichnet, dass** man zunächst Platten (13), von denen von dem hülsenartigen Vorsprung (16) Stege (17) abstehen, am Bolzensetzgerät lose fixiert, indem man die Stege (17) in das Innere der Öffnung des Bolzensetzgeräts drückt, sodass man die Platten (13) ohne weitere Fixierung an der Wand bzw. Decke befestigen kann.

3. Verfahren nach Anspruch 2, **dadurch gekennzeichnet, dass** man Platten (13) verwendet, bei denen der Winkel (α) zwischen den Stegen (17) und dem hülsenartigen Vorsprung (16) 30°-60°, vorzugsweise 40°-50°, beträgt.

4. Verfahren nach Anspruch 2 oder 3, **dadurch gekennzeichnet, dass** man Platten (13) verwendet, bei denen die Stege (17) zumindest an ihrem freien Ende abgeschrägt sind (Abschrägung 20).

5. Verfahren nach einem der Ansprüche 2 bis 5, **dadurch gekennzeichnet, dass** man Platten (13) verwendet, bei denen ein um die Stege (17) gelegter Umkreis (19) einen Durchmesser von 9,310,5 mm hat.

## Claims

1. A method for fastening thermal insulation panels to a wall or a ceiling, in particular for retrofitting to an old building, wherein plates (13) which include a plurality of arms (14) projecting away in a star shape and a sleeve-like projection (16) in the middle are each placed on the ceiling or the wall by driving in a bolt in the middle using a bolt-setting device in such a number, that a plurality of plates (13) are placed on each thermal insulation panel, that adhesive is applied to the plates (13) and, if necessary, to the wall and ceiling, respectively, and then the thermal insulation panels are pressed on.

2. The method according to claim 1, **characterised in that** plates (13) from which webs (17) protrude from the sleeve-like projection (16) are first loosely fixed to the bolt-setting device by pressing the webs (17) into the interior of the opening of the bolt-setting device, such that the plates (13) can be fixed to the wall and the ceiling, respectively, without any further fixing.

3. The method according to claim 2, **characterised in that** plates (13) are used in which the angle (α) between the webs (17) and the sleeve-like projection (16) is 30° - 60°, preferably 40° - 50°.

4. The method according to claim 2 or 3, **characterised in that** plates (13) are used in which the webs (17) are bevelled at least at their free end (bevel 20).

5. The method according to any of claims 2 to 5, **characterised in that** plates (13) are used in which an outer circle (19) placed around the webs (17) has a diameter of 9.3 ± 0.5 mm.

## Revendications

1. Procédé de fixation de panneaux d'isolation thermique sur un mur ou un plafond, notamment pour les installer ultérieurement dans un bâtiment ancien, consistant à mettre en place des plaques (13), lesquelles sont dotées de plusieurs bras (14) s'étendant en étoile vers l'extérieur et d'une saillie (16) en forme de gaine en leur centre, sur ledit plafond ou ledit mur en enfonçant un boulon dans le centre de chacune d'entre elles à l'aide d'un cloueur à poudre, et ceci en nombre suffisant pour que chaque panneau d'isolation thermique soit en relation avec plusieurs plaques (13), les plaques (13) et éventuellement ledit mur ou ledit plafond étant enduits d'adhésif pour ensuite y mettre les panneaux d'isolation thermique en exerçant une pression.

2. Procédé selon la revendication 1, **caractérisé en ce que** l'on met en place d'abord, librement sur le cloueur à poudre, des plaques (13) dont la saillie (16) en forme de gaine est dotée d'éléments longiformes (17) s'étendant vers l'extérieur, en insérant les éléments longiformes (17) dans l'intérieur de l'ouverture du cloueur à poudre, faisant en sorte qu'on puisse fixer les plaques (13) audit mur ou audit plafond, sans recours à d'autres moyens de fixation.

3. Procédé selon la revendication 2, **caractérisé en ce que** l'on utilise des plaques (13) présentant, entre des éléments longiformes (17) et la saillie (16) en forme de gaine, un angle (α) de 30° à 60°, préférentiellement de 40° à 50°.

4. Procédé selon les revendications 2 ou 3, **caractérisé en ce que** l'on utilise des plaques (13) dont les éléments longiformes (17) sont biseautés (biseau 20) au moins sur leur extrémité libre.

5. Procédé selon l'une des revendications 2 à 5, **caractérisé en ce que** l'on utilise des plaques (13) dont une circonférence (19), établie autour des éléments longiformes (17), présente un diamètre de 9,3 ± 0,5 mm.
